# EUROPEAN PATENT SPECIFICATION

(11) **EP 4 239 304 B1**
(45) Date of publication and mention of the grant of the patent: **30.07.2025**
(21) Application number: 23154638.3
(22) Date of filing: 02.02.2023
(51) Int. Cl.: G01L 19/04, G01L 19/14, G01L 9/00

(54) **ELECTRICAL TESTING SYSTEM AND CORRESPONDING ELECTRICAL TESTING METHOD**
ELEKTRISCHES TESTSYSTEM UND ENTSPRECHENDES ELEKTRISCHES TESTVERFAHREN
SYSTÈME DE TEST ÉLECTRIQUE ET MÉTHODE DE TEST ÉLECTRIQUE CORRESPONDANTE

(30) Priority: 01.03.2022 IT 202200003824
(43) Date of publication of application: 06.09.2023
(73) Proprietor: STMicroelectronics S.r.l., 20864 Agrate Brianza (MB) (IT)
(72) Inventor: DUQI, Enri, 20147 MILANO (IT); DANIELE, Filippo, 20149 MILANO (IT); BALDO, Lorenzo, 20010 BAREGGIO (MI) (IT); CAPELLI, Giulio, 20147 MILANO (IT); ALONGI, Salvatore, 20128 MILANO (IT)
(74) Representative: Studio Torta S.p.A.

(56) References cited:
- US-A1- 2019 086 284
- US-A1- 2020 049 539

## Description

The present solution relates to a system and method for electrical testing of a waterproof pressure sensor device with improved temperature calibration.

Water-resistant or impermeable (so-called "waterproof") microelectromechanical (MEMS - Micro Electro Mechanical System) pressure sensor devices are known.

These pressure sensor devices may for example be used in portable or wearable electronic apparatuses, such as smartphones, smartbands or smart watches, which may be used for underwater applications or in general in-water.

The aforementioned pressure sensor devices typically comprise a detection structure provided with a membrane suspended above a cavity and wherein detection elements (for example piezoresistors) are provided, to detect the deformation caused by impinging pressure waves.

This detection structure is integrated within a package, usually together with corresponding signal reading and processing electronics, provided as an ASIC (Application Specific Integrated Circuit), which provides at an output a pressure signal, indicative of the detected pressure.

The aforementioned package has an inlet opening, to allow the detection of the external pressure, and internally defines a housing cavity wherein the aforementioned detection structure and the associated ASIC are accommodated.

Typically, this housing cavity is filled with a protective coating, such as a coating gel (so-called "potting gel"), for example of polymeric or silicone type, which coats and protects the detection structure and the ASIC from humidity and in general from contaminants coming from outside of the package. Only this protective material is in contact with the external environment, effectively making the housing cavity (filled with the same protective material) impermeable or hermetic.

In a known manner, electrical test procedures of a pressure sensor device, in particular at the end of a corresponding manufacturing process, include carrying out a plurality of pressure measurements at different temperature values, to calibrate the response of the same pressure sensor device as the temperature varies (for example in order to adapt, as a function of the temperature, the pressure signal provided at the output during subsequent normal operation).

These test procedures typically envisage use of an external test equipment, provided with measurement probes and configured to adjust the temperature of a test chamber wherein the pressure sensor device is arranged, to vary the temperature thereof and acquire corresponding calibration pressure signals. For example, the pressure signal at the output of the pressure sensor device may be acquired at the following different calibration temperature values (or set points): 10°C, 42,5°C and 70°C.

A suitable temperature sensor may be integrated in the pressure sensor device, in order to implement a feedback control of the temperature reached by the same pressure sensor device during the calibration phase.

A problem affecting this test procedure is related to the fact that the aforementioned protective coating within the package of the pressure sensor device is thermally insulating, due to the reduced thermal conductivity of the material of which it is made.

Consequently, during the aforementioned test procedure, long waiting times are generally needed to reach the desired calibration temperature values; in particular, these waiting times may even be in the order of tens of seconds.

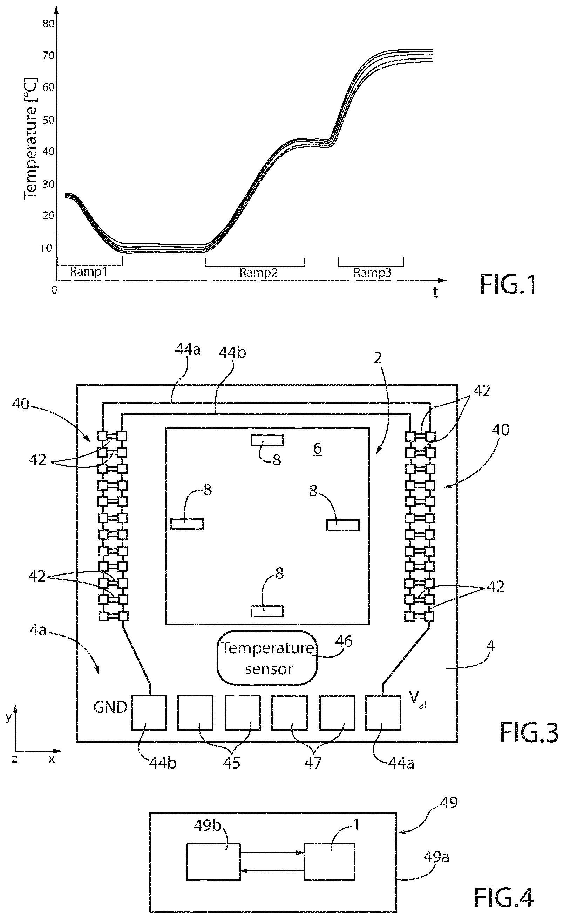

By way of example, Figure 1 shows the test temperature trend during a calibration procedure, considering a plurality of different pressure sensor devices subject to electrical testing.

This Figure 1 shows the ramps required for the temperature to stabilize around the calibration values; in the example, these ramps (indicated with "Ramp1", "Ramp2" and "Ramp3") have the following average durations, considering the pressure sensor devices tested: about 30 s for the ramp from 25°C to 10°C (Ramp1); about 50 s for the ramp from 10°C to 42.5°C (Ramp2); and about 30 s for the ramp from 42.5°C to 70°C (Ramp3).

In particular, time delays mainly occur in proximity of the calibration values, when the reduction of the thermal gradient between the measurement chamber and the inside of the pressure sensor device determines a reduction in the heat transfer rate and consequent waiting times for reaching the calibration values.

These waiting times generally entail a considerable overall duration of the electrical procedures for testing of the pressure sensor devices.

Moreover, the circuitry required in the external test equipment for controlling and adjusting the calibration temperature for the pressure sensor device is rather complex.

US 2019/086284 A1 discloses a portable electronic device including a pressure sensor having an integrated heater. The heater may be operated to heat some or all of the pressure sensor for pressure sensor testing, calibration, or temperature-controlled pressure sensing operations.

US 2020/049539 A1 discloses a CMOS-based sensing device comprising a substrate having an etched portion, a membrane region formed over an area of the etched portion of the substrate, a flow sensor formed within the membrane region and a pressure sensor formed within the membrane region.

The aim of the present solution is, in general, to overcome the previously highlighted drawbacks of the known solutions.

According to the present invention, a system for electrical testing of a pressure sensor device and a corresponding method are therefore provided, as defined in the attached claims.

For a better understanding of the present solution, embodiments thereof are now described, purely by way of non-limiting example and with reference to the attached drawings, wherein:
- Figure 1 shows an exemplary trend of a calibration temperature during an electrical test procedure of pressure sensor devices;
- Figure 2 illustrates a schematic cross-section of a pressure sensor device, according to an embodiment of the present solution;
- Figure 3 illustrates a schematic plan view of a pressure detection structure of the pressure sensor device of Figure 2, with an associated heating structure;
- Figure 4 is a schematic block diagram of a test system for the pressure sensor device; and
- Figures 5 and 6 are flowcharts of electrical test procedures for the pressure sensor device.

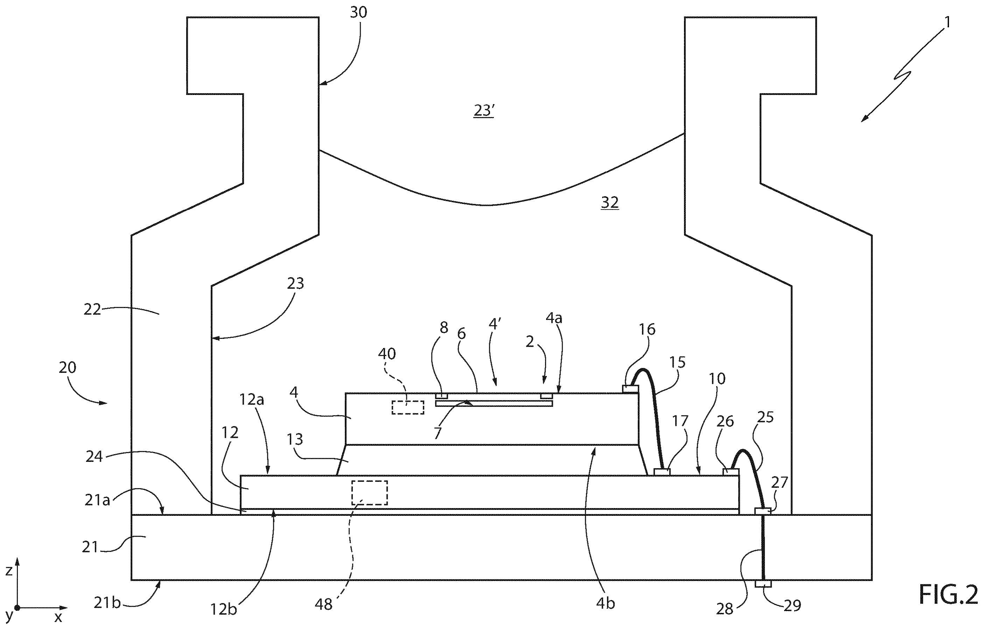

Figure 2 shows a pressure sensor device 1, comprising a pressure detection structure 2 provided in a first die 4 of semiconductor material, in particular silicon.

The first die 4 has a top surface 4a and a bottom surface 4b, with extension parallel to a horizontal plane xy and opposite to each other along a vertical axis z, orthogonal to the aforementioned horizontal plane xy.

The pressure detection structure 2 comprises a membrane 6, provided at the top surface 4a, arranged above a cavity 7, buried within the die 4; in other words, the membrane 6 is interposed between the underlying cavity 7 and the aforementioned top surface 4a of the first die 4.

Detection elements 8, in particular piezoresistors, are arranged in the membrane 6 and are configured to allow detection of deformations of the membrane 6 due to impinging pressure waves.

The pressure sensor device 1 further comprises a processing circuit 10, implemented as an ASIC, integrated in a second die 12 of semiconductor material, in particular silicon, having a respective top surface 12a and a respective bottom surface 12b.

In the illustrated embodiment, the aforementioned first and second dies 4, 12 are arranged stacked, with the top surface 12a of the second die 12 coupled, by a first bonding region 13 to the bottom surface 4b of the first die 4.

First bonding wires 15 electrically connect first pads 16 carried by the top surface 4a of the first die 4 to respective second pads 17 carried by the top surface 12a of the second die 12, to allow the electrical connection between the pressure detection structure 2 (and the corresponding detection elements 8) and the processing circuit 10.

In particular, the processing circuit 10 is configured to generate, as a function of electrical signals supplied by the detection elements 8, an output pressure signal, indicative of the pressure impinging on the membrane 6.

The pressure sensor device 1 also comprises a waterproof package 20, configured to internally accommodate the aforementioned stack formed by the pressure detection structure 2 and the associated processing circuit 10 in an impermeable or hermetic manner.

This package 20 comprises a base structure 21 and a body structure 22, arranged on the base structure 21 and having a cup shape and internally defining a housing cavity 23, in which the pressure detection structure 2 and the processing circuit 10 are arranged.

The bottom surface 12b of the second die 12 is coupled, by a second bonding region 24, to an internal surface 21a of the base structure 21, facing the aforementioned housing cavity 23.

Second bonding wires 25 electrically connect third pads 26 carried by the top surface 12a of the second die 12, to respective fourth pads 27 carried by the internal surface 21a of the base structure 21, to allow the electrical connection between the processing circuit 10 and the outside of the package 20.

To this end, electrically conductive through vias 28 traverse the entire thickness of the base structure 21 and connect the aforementioned fourth pads 27 to external connection elements 29, for example provided in the form of respective pads (as in the illustrated example) or of conductive bumps, carried by an external surface 21b of the same base structure 21, placed in contact with the external environment.

In a manner not illustrated, these external connection elements 29 may be contacted, from the outside of the package 20, for example by a control unit of an electronic apparatus wherein the pressure sensor device 1 is incorporated, or, as will be discussed in detail hereinbelow, by an electrical testing equipment.

The aforementioned body structure 22 has upwardly (at one end opposite to the base structure 21) an access opening 30, for allowing introduction within the package 20 of the pressure waves to be detected.

A protective coating 32 fills almost entirely the aforementioned housing cavity 23 and entirely covers and coats the aforementioned stack formed by the pressure detection structure 2 and the associated processing circuit 10, to ensure its protection from water (or in general from contaminants coming from the external environment); this protective coating 32 is in particular a coating gel (potting gel), for example a polymeric or silicone gel.

According to an aspect of the present solution, the pressure sensor device 1 further comprises, integrated in the same first die 4, a heating structure 40 (shown schematically in Figure 2), configured to allow heating of the pressure detection structure 2, internally to the package 20 of the same pressure sensor device 1.

In detail and with reference also to Figure 3 (which shows, by way of example, the aforementioned membrane 6 with a cross-shaped arrangement of four detection elements 8), this heating structure 40 comprises a plurality of resistive elements 42, arranged in proximity of the membrane 6, at the top surface 4a of the first die 4.

Such resistive elements 42 are for example made by respective regions of polysilicon (or other suitable material) formed on the top surface 4a of the first die 4, laterally and externally with respect to the membrane 6.

In the example shown, the membrane 6 is substantially square-shaped in the horizontal plane xy and the aforementioned resistive elements 42 are arranged in two groups, aligned respectively to a first and a second side, opposite to each other, of the same membrane 6.

These resistive elements 42 are electrically parallel-connected to each other by a first and a second conductive track 43a, 43b, also provided on the same top surface 4a of the first die 4. In particular, the first conductive track 43a connects first ends of the aforementioned resistive elements 42 to each other and to a first pad 44a formed on the aforementioned top surface 4a; and the second conductive track 43b connects second ends of the aforementioned resistive elements 42 to each other and to a second pad 44b.

During operation, the first pad 44a is for example set to a supply potential (Vₐₗ) and the second pad 44b is set to a reference potential (ground, GND), such that a heating current flows through the aforementioned resistive elements 42, causing heating thereof and, consequently, causing a variation in the temperature of the adjacent pressure detection structure 2.

Advantageously, the parallel connection of the resistive elements 42 allows a low resistance to the flow of the aforementioned heating current to be obtained, so to reduce the electrical consumption associated with the aforementioned heating.

For example, in the illustrated embodiment, the aforementioned heating structure 40 comprises twenty-four resistive elements 42 parallel-connected to each other, each provided with a polysilicon region having a width equal to 6 µm and a length equal to 21 µm, to form an overall resistance having the value of 104 Ω (considering a resistivity for the polysilicon equal to 725 Ω/sq).

The pressure sensor device 1 moreover comprises further pads 45, which are electrically connected (in a manner not illustrated) to the detection elements 8 arranged in the membrane 6, to allow detection of deformations of the same membrane 6.

Furthermore, the pressure sensor device 1 comprises at least one temperature sensor 46 (schematically shown in the same Figure 3), also integrated in the first die 4, in the example in proximity to the membrane 6, for allowing detection of the temperature of the pressure detection structure 2. To this end, the aforementioned temperature sensor 46 is electrically connected (in a manner not illustrated) to respective pads 47, also formed on the top surface 4a of the first die 4.

In a manner not illustrated in detail, respective first +bonding wires 15 may electrically connect the first and the second pads 44a, 44b and the further pads 45 and 47 to the processing circuit 10 integrated in the second die 12.

In a possible embodiment, as schematically shown in the aforementioned Figure 2, this processing circuit 10 may comprise a temperature adjustment module 48, integrated in the second die 12 and configured to control the supply of the aforementioned heating current to the heating structure 40, on the basis of a feedback control of the temperature reached by the pressure detection structure 2, detected through the aforementioned temperature sensor 46, in particular during a test and temperature calibration procedure of the pressure sensor device 1.

In an alternative embodiment (here not illustrated), bonding wires may connect the aforementioned first and second pads 44a, 44b directly to respective fourth pads 27 carried by the internal surface 21a of the base structure 21, to allow the electrical connection towards the outside of the package 20. In this case, the adjustment of the temperature of the pressure detection structure 2 through the aforementioned heating structure 40 may be entrusted to an electronic equipment external to the pressure sensor device 1.

Tests carried out by the present Applicant have shown a high response speed by the heating structure 40, for example with the possibility of raising the temperature of the pressure detection structure 2 from 20°C to 50°C in just 150 ms, for a resulting heating rate of 200°C/s (instead of a heating rate of 4°C/s obtainable by heating the pressure sensor device 1 from the outside by the external testing equipment).

The aforementioned heating structure 40 may therefore be operated to cause heating of the pressure detection structure 2 from the inside of the package 20 of the pressure sensor device 1, during an electrical test and temperature calibration procedure of the pressure sensor device 1.

In particular, the aforementioned heating structure 40 may cause such heating in cooperation with this external testing equipment.

In this regard, Figure 4 schematically shows an electrical test system 49, comprising a test chamber 49a and a testing equipment 49b, arranged in the test chamber 49a and configured to perform test and calibration procedures of the pressure sensor device 1, in particular to acquire pressure signals at different calibration temperature values.

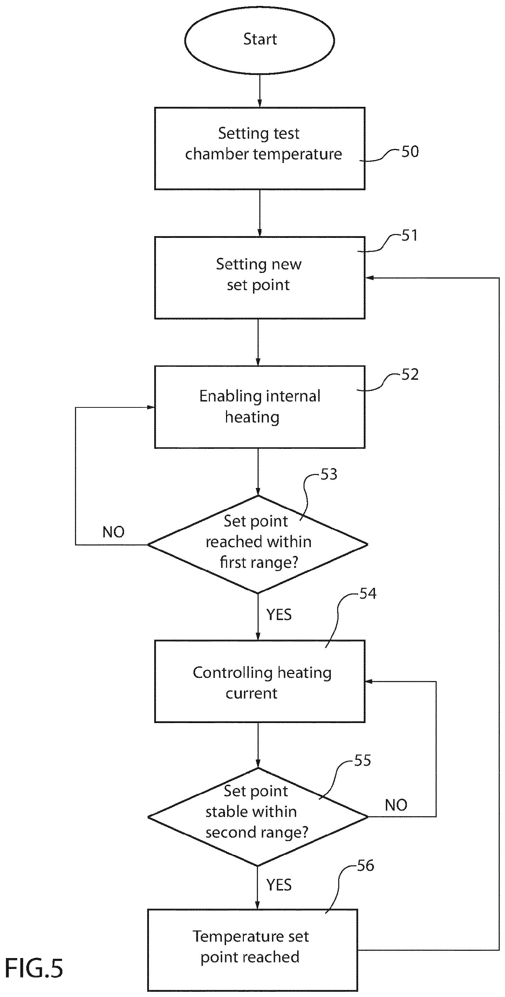

With reference to Figure 5, a first test and temperature calibration procedure is now described (which is not part of the claimed invention), wherein the adjustment of the temperature of the pressure sensor device 1 is entrusted in an exclusive manner to the sole heating structure 40 (i.e., without the intervention of the aforementioned testing equipment 49b being required).

In detail, in an initial step 50, the temperature of the aforementioned test chamber 49a wherein the pressure sensor device 1 is accommodated during the test procedure is set to a temperature lower than a first calibration temperature value, for example a temperature equal to 5°C.

Subsequently, at step 51, a new temperature set point is iteratively established for the calibration of the pressure sensor device 1 (in particular, the first temperature set point, in the case of a first iteration of the procedure, is for example equal to 10°C).

Then, at step 52, the internal heating of the same pressure sensor device 1 is implemented, by enabling the corresponding heating structure 40 with the supply of the heating current.

Then, at step 53, it is verified whether the established temperature set point has been reached within a first temperature range, for example ±5°C around the aforementioned set point (note that this verification may be implemented on the basis of the information provided by the temperature sensor 46 internal to the same pressure sensor device 1).

In case the verification is positive, at step 54, a feedback control of the heating current supplied to the heating structure 40 is implemented, for example by the aforementioned temperature adjustment module 48 internal to the processing circuit 10, in order to reach a stable temperature of the same heating structure 40.

In particular, at step 55, it is verified that the established temperature set point is stable within a second temperature range, lower with respect to the aforementioned first temperature range, for example of ±0.2°C around the established set point.

In case the verification is positive, at step 56, it is determined that the set point has been reached and, for example, the acquisition and storage of a corresponding calibration value for the pressure signal provided at the output of the pressure sensor device 1 is implemented.

Then, the procedure may proceed iteratively (returning to the aforementioned step 51) with the setting of a new temperature set point, for example having a value higher than the previous one, until the calibration of the pressure sensor device 1 ends.

According to the claimed invention, heating of the pressure detection structure 2 may be implemented in conjunction and in cooperation by the aforementioned heating structure 40 internal to the pressure sensor device 1 and by the testing equipment 49b external to the same pressure sensor device **1.**

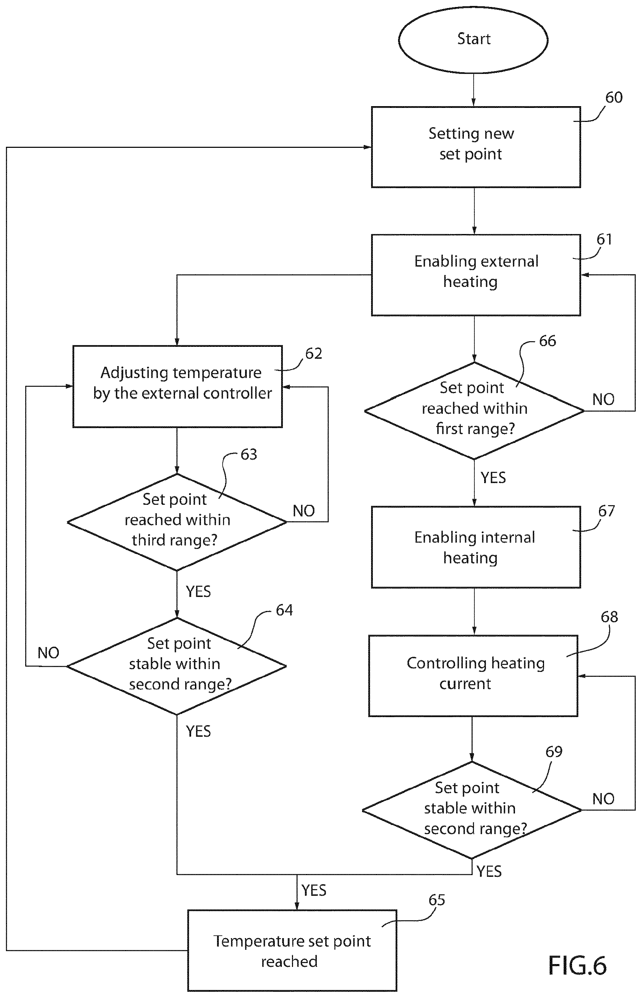

With reference to Figure 6, in this case, in an initial step 60 the new temperature set point is established iteratively for the calibration of the pressure sensor device 1 (in particular, the first temperature set point, in the case of a first iteration of the procedure).

Then, at step 61, the testing equipment 49b is operated to heat from the outside, by heat conduction, the pressure detection structure 2 of the pressure sensor device 1 (the testing equipment 49b is in this case operated to generate heat within the testing chamber in which the pressure sensor device 1 is contained, and thereby to heat externally, by heat conduction from the outside of the package, the same pressure sensor device 1).

In particular, as shown in step 62, a controller of this testing equipment 49b (for example a PID - Proportional Integral Derivative - controller) adjusts the heating/cooling of the pressure sensor device 1 (for example, using the information provided as a feedback by the temperature sensor 46 internal to the same pressure sensor device 1).

Then, at step 63, a verification is made by the same controller whether the established temperature set point has been reached within a third temperature range, for example of ±0.5°C around the aforementioned set point (note that this third temperature range is intermediate between the aforementioned first and second temperature ranges).

Following a positive verification, the same controller proceeds to a new verification, at step 64, to verify that the temperature is stable within the aforementioned second temperature range, for example of ±0.2°C, around the established set point.

In case the verification is positive, at step 65, it is determined that the set point has been reached and the calibration procedure is implemented, for example by acquiring and storing a corresponding value for the pressure signal provided at the output of the pressure sensor device 1.

In this case, in parallel to the temperature adjustment action implemented by the testing equipment 49b, as soon as it is verified, at step 66, that the established temperature set point has been reached within the aforementioned first temperature range, for example of ±5°C, the internal heating of the same pressure sensor device 1 is also enabled, at step 67, by enabling the corresponding heating structure 40 with the supply of the heating current.

Note that this internal heating therefore operates in conjunction with the heating from the outside implemented by testing equipment 49b, thus speeding up reaching of the established temperature set point.

In particular, as shown in step 68, the feedback control of the heating current supplied to the heating structure 40 is implemented, for example by the aforementioned temperature adjustment module 48 internal to the processing circuit 10, in order to reach the stable temperature of the same heating structure 40.

As soon as it is verified, at step 69, that the temperature is stable within the second temperature range around the established set point, it is determined that the set point has been reached and the acquisition of the calibration signal is implemented (as previously described at step 65).

The procedure may then proceed iteratively with the establishment of a new temperature set point (at step 60), for example having a value higher than the previous one, until the calibration of the pressure sensor device 1 ends.

The advantages that the present solution affords are clear from the preceding description.

In any case, it is highlighted that integration of the heating structure 40 within the pressure sensor device 1 allows a considerable reduction of the times required by the electrical test procedure of the same pressure sensor device 1 and also a reduction of the complexity of the testing equipment 49b.

The presence of this heating structure 40 allows the temperature of each pressure sensor device 1 to be finely adjusted, possibly also during its normal operation (even outside the aforementioned electrical test procedure).

Finally, variations and modifications may be applied to the present solution, without thereby departing from the scope defined by the claims.

In particular, it is highlighted that the number and arrangement of the resistive elements 42 of the aforementioned heating structure 40 may vary with respect to what has been previously illustrated by way of example. For example, these resistive elements 42 may be arranged around the entire perimeter of the membrane 6 of the pressure detection structure 2 in the horizontal plane xy, or be arranged side by side to only one or even more of the sides of the same membrane 6. The same resistive elements 42 may also be made with a material other than polysilicon.

Finally, it is noted that the pressure sensor device 1 may have various fields of use, for example for industrial or automotive applications, in general in any application wherein hermetic pressure detection is required.

## Claims

1. An electrical testing system (49), comprising:
a pressure sensor device (1);
a test chamber (49a), accommodating the pressure sensor device (1); and
a testing equipment (49b), arranged in the test chamber (49a) and configured to acquire, at different temperature reference values, output signals from the pressure detection structure (2) of the pressure sensor device (1),
wherein the pressure sensor device (1) comprises:
a pressure detection structure (2) provided in a first die (4) of semiconductor material;
a package (20), configured to internally accommodate said pressure detection structure (2) in an impermeable manner, said package (20) comprising a base structure (21) and a body structure (22), arranged on the base structure (21), having an access opening (30) in contact with an external environment and internally defining a housing cavity (23), in which said first die (4) is arranged covered with a coating material (32); and
a heating structure (40), accommodated in said housing cavity (23) and configured to implement heating of said pressure detection structure (2) from the inside of said package (20),
wherein the testing equipment (49b) is configured to adjust the temperature of said pressure detection structure (2) from outside of said package (20), in cooperation and in conjunction with said heating structure (40);
said testing equipment (49b) being further operable to heat from the outside, by heat conduction, the pressure detection structure (2) of the pressure sensor device (1).

2. The system according to claim 1, wherein said heating structure (40) is integrated in said first die (4).

3. The system according to claim 2, wherein said heating structure (40) comprises a plurality of resistive elements (42), arranged at a top surface (4a) of the first die (4), parallel-connected to each other for being traversed by a heating electric current to implement the heating of said pressure detection structure (2).

4. The system according to claim 3, wherein said pressure detection structure (2) comprises: a membrane (6), provided at the top surface (4a) of said first die (4), arranged above a respective cavity (7), buried within the first die (4); and detection elements (8), of a piezoresistive type, arranged in said membrane (6) and configured to allow detection of deformations of the membrane (6) due to impinging pressure waves; wherein said resistive elements (42) of said heating structure (40) are arranged externally to, and in proximity of, said membrane (6).

5. The system according to claim 3 or 4, wherein said resistive elements (42) are made by respective polysilicon regions formed on the top surface (4a) of said first die (4), laterally and externally with respect to said membrane (6).

6. The system according to any of claims 3-5, wherein the pressure sensor device (1) further comprises a processing circuit (10), implemented as an ASIC (Application Specific Integrated Circuit), integrated in a second die (12) of semiconductor material, accommodated in said housing cavity (23) of said package (20); said processing circuit (10) comprising a temperature adjustment module (48), integrated in the second die (12) and configured to control supply of the heating current to the heating structure (40).

7. The system according to claim 6, further comprising a temperature sensor (46), integrated in the first die (4), for allowing detection of the temperature of the pressure detection structure (2); wherein said temperature adjustment module (48) is configured to control the supply of the heating current to the heating structure (40) on the basis of a feedback control of the temperature of the pressure detection structure (2), detected through said temperature sensor (46), during a test and temperature calibration procedure of the pressure sensor device (1).

8. The system according to claim 6 or 7, wherein said first and second dies (4, 12) are arranged stacked, with a top surface (12a) of the second die (12) coupled, by a bonding region (13), to the bottom surface (4b) of the first die (4).

9. A method for electrical testing of a pressure sensor device (1) accommodated in the electrical testing system (49) according to any of the preceding claims,
said method comprising:
adjusting the temperature of said pressure detection structure (2) from inside of said package (20) by the heating structure (40) accommodated in said housing cavity (23).

10. The method according to claim 9, comprising acquiring output signals from the pressure detection structure (2) of the pressure sensor device (1) at different temperature reference values.

11. The method according to claim 9 or 10, comprising: enabling a temperature adjustment through said external testing equipment (49b); and subsequently enabling said heating structure (40) when the temperature of said pressure detection structure (2) is in a first range around a desired temperature reference value.

12. The method according to claim 11, comprising implementing a feedback control of the heating current supplied to the heating structure (40), in order to reach a stable temperature of the heating structure (40) within a second temperature range around the desired temperature reference value, said second range being smaller than said first range.

## Patentansprüche

1. Elektrisches Prüfsystem (49), umfassend:
eine Drucksensorvorrichtung (1);
eine Prüfkammer (49a), die die Drucksensorvorrichtung (1) aufnimmt; und
eine Prüfeinrichtung (49b), die in der Prüfkammer (49a) angeordnet und so ausgestaltet ist, dass sie bei verschiedenen Temperaturreferenzwerten Ausgangssignale von der Druckdetektionsstruktur (2) der Drucksensorvorrichtung (1) erfasst,
wobei die Drucksensorvorrichtung (1) umfasst:
eine Druckdetektionsstruktur (2), die in einer ersten Matrize (4) aus Halbleitermaterial vorgesehen ist;
eine Verpackung (20), die so ausgestaltet ist, dass sie die Druckdetektionsstruktur (2) auf undurchlässige Weise im Inneren aufnimmt, wobei die Verpackung (20) eine Basisstruktur (21) und eine auf der Basisstruktur (21) angeordnete Körperstruktur (22) umfasst, die eine Zugangsöffnung (30) aufweist, die mit einer Außenumgebung in Kontakt steht und im Inneren einen Gehäusehohlraum (23) definiert, in dem die erste Matrize (4) mit einem Beschichtungsmaterial (32) bedeckt angeordnet ist; und
eine Heizstruktur (40), die in dem Gehäusehohlraum (23) aufgenommen und so ausgestaltet ist, dass sie das Erwärmen der Druckdetektionsstruktur (2) von der Innenseite der Verpackung (20) aus implementiert,
wobei die Prüfeinrichtung (49b) so ausgestaltet ist, dass sie die Temperatur der Druckdetektionsstruktur (2) von der Außenseite der Verpackung (20) in Zusammenwirken und in Verbindung mit der Heizstruktur (40) anpasst;
wobei die Prüfeinrichtung (49b) weiter so betrieben werden kann, dass sie die Druckdetektionsstruktur (2) der Drucksensorvorrichtung (1) von der Außenseite her durch Wärmeleitung erwärmt.

2. System nach Anspruch 1, wobei die Heizstruktur (40) in die erste Matrize (4) integriert ist.

3. System nach Anspruch 2, wobei die Heizstruktur (40) eine Vielzahl von an einer oberen Fläche (4a) der ersten Matrize (4) angeordneten Widerstandselementen (42) umfasst, die miteinander parallelgeschaltet sind, um von einem elektrischen Heizstrom durchflossen zu werden, um das Erwärmen der Druckdetektionsstruktur (2) zu implementieren.

4. System nach Anspruch 3, wobei die Druckdetektionsstruktur (2) umfasst: eine an der oberen Fläche (4a) der ersten Matrize (4) vorgesehene Membran (6), die oberhalb eines jeweiligen in der ersten Matrize (4) vergrabenen Hohlraums (7) angeordnet ist; und Detektionselemente (8) vom piezoresistiven Typ, die in der Membran (6) angeordnet und so ausgestaltet sind, dass sie die Detektion von Verformungen der Membran (6) aufgrund von auftreffenden Druckwellen ermöglichen; wobei die Widerstandselemente (42) der Heizstruktur (40) außerhalb und in der Nähe der Membran (6) angeordnet sind.

5. System nach Anspruch 3 oder 4, wobei die Widerstandselemente (42) aus jeweiligen Polysiliziumbereichen bestehen, die auf der oberen Fläche (4a) der ersten Matrize (4) seitlich und außerhalb in Bezug auf die Membran (6) gebildet sind.

6. System nach einem der Ansprüche 3-5, wobei die Drucksensorvorrichtung (1) weiter eine als ASIC (anwendungsspezifische integrierte Schaltung) implementierte, in einer im Gehäusehohlraum (23) der Verpackung (20) aufgenommenen zweiten Matrize (12) aus Halbleitermaterial integrierte Verarbeitungsschaltung (10) umfasst; wobei die Verarbeitungsschaltung (10) ein Temperaturanpassungsmodul (48) umfasst, das in der zweiten Matrize (12) integriert und so ausgestaltet ist, dass es die Zufuhr des Heizstroms zur Heizstruktur (40) steuert.

7. System nach Anspruch 6, das weiter einen Temperatursensor (46) umfasst, der in die erste Matrize (4) integriert ist, um die Detektion der Temperatur der Druckdetektionsstruktur (2) zu ermöglichen; wobei das Temperaturanpassungsmodul (48) so ausgestaltet ist, dass es die Zufuhr des Heizstroms zur Heizstruktur (40) auf Basis einer Rückkopplungssteuerung der Temperatur der Druckdetektionsstruktur (2), die durch den Temperatursensor (46) detektiert wird, während eines Prüf- und Temperaturkalibrierungsablaufs der Drucksensorvorrichtung (1) steuert.

8. System nach Anspruch 6 oder 7, wobei die erste und die zweite Matrize (4, 12) gestapelt angeordnet sind, wobei eine obere Fläche (12a) der zweiten Matrize (12) über einen Verbindungsbereich (13) mit der unteren Fläche (4b) der ersten Matrize (4) gekoppelt ist.

9. Verfahren zum elektrischen Prüfen einer Drucksensorvorrichtung (1), die in dem elektrischen Prüfsystem (49) nach einem der vorstehenden Ansprüche aufgenommen ist,
wobei das Verfahren umfasst:
Anpassen der Temperatur der Druckdetektionsstruktur (2) von der Innenseite der Verpackung (20) aus durch die Heizstruktur (40), die in dem Gehäusehohlraum (23) aufgenommen ist.

10. Verfahren nach Anspruch 9, das das Erfassen von Ausgangssignalen von der Druckdetektionsstruktur (2) der Drucksensorvorrichtung (1) bei verschiedenen Temperaturreferenzwerten umfasst.

11. Verfahren nach Anspruch 9 oder 10, umfassend: Aktivieren einer Temperaturanpassung durch die externe Prüfeinrichtung (49b); und anschließendes Aktivieren der Heizstruktur (40), wenn die Temperatur der Druckdetektionsstruktur (2) in einem ersten Bereich um einen gewünschten Temperaturreferenzwert herum liegt.

12. Verfahren nach Anspruch 11, das das Implementieren einer Rückkopplungssteuerung des der Heizstruktur (40) zugeführten Heizstroms umfasst, um eine stabile Temperatur der Heizstruktur (40) innerhalb eines zweiten Temperaturbereichs um den gewünschten Temperaturreferenzwert
herum zu erreichen, wobei der zweite Bereich kleiner ist als der erste Bereich.

## Revendications

1. Système d'essai électrique (49) comprenant :
un dispositif formant capteur de pression (1) ;
une chambre d'essai (49a) contenant le dispositif formant capteur de pression (1) ; et
un équipement d'essai (49b), placé dans la chambre d'essai (49a) et configuré pour acquérir, à différentes valeurs de référence de température, des signaux de sortie de la structure de détection de pression (2) du dispositif formant capteur de pression (1),
dans lequel le dispositif formant capteur de pression (1) comprend :
une structure de détection de pression (2) fournie dans une première matrice (4) de matériau semiconducteur ;
un boîtier (20), configuré pour recevoir intérieurement ladite structure de détection de pression (2) de manière imperméable, ledit boîtier (20) comprenant une structure de base (21) et une structure de corps (22), placée sur la structure de base (21), ayant une ouverture d'accès (30) en contact avec un environnement extérieur et définissant intérieurement une cavité de logement (23), dans laquelle est placée ladite première matrice (4) couverte d'un matériau de revêtement (32) ; et
une structure chauffante (40), placée dans ladite cavité de logement (23) et configurée pour réaliser un chauffage de ladite structure de détection de pression (2) depuis l'intérieur dudit boîtier (20),
dans lequel l'équipement d'essai (49b) est configuré pour ajuster la température de ladite structure de détection de pression (2) depuis l'extérieur dudit boîtier (20), en coopération et en conjonction avec ladite structure chauffante (40) ;
ledit équipement d'essai (49b) pouvant en outre être utilisé pour chauffer de l'extérieur, par conduction thermique, la structure de détection de pression (2) du dispositif formant capteur de pression (1).

2. Système selon la revendication 1, dans lequel ladite structure chauffante (40) est intégrée à ladite première matrice (4).

3. Système selon la revendication 2, dans lequel ladite structure chauffante (40) comprend une pluralité d'éléments résistifs (42), placés sur une surface supérieure (4a) de la première matrice (4), montés en parallèle entre eux pour pouvoir être traversés par un courant électrique de chauffage pour mettre en œuvre le chauffage de ladite structure de détection de pression (2).

4. Système selon la revendication 3, dans lequel ladite structure de détection de pression (2) comprend : une membrane (6), placée au niveau de la surface supérieure (4a) de ladite première matrice (4), disposée au-dessus d'une cavité respective (7), incorporée dans la première matrice (4) ; et des éléments de détection (8), de type piézorésistif, placés dans ladite membrane (6) et configurés pour permettre la détection des déformations de la membrane (6) provoquées par des ondes de pression ; dans lequel lesdits éléments résistifs (42) de ladite structure chauffante (40) sont disposés extérieurement à ladite membrane (6) et à proximité de celle-ci.

5. Système selon la revendication 3 ou 4, dans lequel lesdits éléments résistifs (42) sont constitués de régions de polysilicium respectives formées sur la surface supérieure (4a) de ladite première matrice (4), latéralement et extérieurement par rapport à ladite membrane (6).

6. Système selon l'une quelconque des revendications 3 à 5, dans lequel le dispositif formant capteur de pression (1) comprend en outre un circuit de traitement (10), mis en œuvre sous la forme d'un circuit intégré spécialisé (ASIC), intégré dans une deuxième matrice (12) de matériau semiconducteur, placé dans ladite cavité de logement (23) dudit boîtier (20) ; ledit circuit de traitement (10) comprenant un module de réglage de température (48), intégré à ladite deuxième matrice (12) et configuré pour commander la fourniture du courant de chauffage à la structure chauffante (40).

7. Système selon la revendication 6, comprenant en outre un capteur de température (46), intégré à la première matrice (4), pour permettre la détection de la température de la structure de détection de pression (2) ; dans lequel ledit module de réglage de température (48) est configuré pour commander la fourniture du courant de chauffage à la structure chauffante (40) en fonction d'un asservissement de la température de la structure de détection de pression (2), détectée par l'intermédiaire dudit capteur de température (46), au cours d'une procédure d'essai et d'étalonnage de température du dispositif formant capteur de pression (1).

8. Système selon la revendication 6 ou 7, dans lequel lesdites première et deuxième matrices (4, 12) sont disposées en empilement, avec une surface supérieure (12a) de la deuxième matrice (12) couplée, par une région de connexion (13), à la surface inférieure (4b) de la première matrice (4).

9. Procédé d'essai électrique d'un dispositif formant capteur de pression (1) placé dans le système d'essai électrique (49) selon l'une quelconque des revendications précédentes,
ledit procédé comprenant le fait d'ajuster la température de ladite structure de détection de pression (2) depuis l'intérieur dudit boîtier (20) au moyen de la structure chauffante (40) placée dans ladite cavité de logement (23).

10. Procédé selon la revendication 9, comprenant le fait d'acquérir des signaux de sortie de la structure de détection de pression (2) du dispositif formant capteur de pression (1) à différentes valeurs de référence de température.

11. Procédé selon la revendication 9 ou 10, comprenant le fait d'activer un réglage de température par l'intermédiaire dudit équipement d'essai externe (49b), puis d'activer ladite structure chauffante (40) lorsque la température de ladite structure de détection de pression (2) se trouve dans une première plage autour d'une valeur de référence de température souhaitée.

12. Procédé selon la revendication 11, comprenant le fait de mettre en œuvre un asservissement du courant de chauffage fourni à la structure chauffante (40), afin d'atteindre une température stable de la structure chauffante (40) dans une deuxième plage de température autour de la valeur de référence de température souhaitée, ladite deuxième plage étant plus petite que ladite première plage.
